(19) Europäisches Patentamt
European Patent Office
Office européen des brevets

(11) **EP 2 563 741 B1**

## (12) FASCICULE DE BREVET EUROPEEN

(45) Date de publication et mention
de la délivrance du brevet:
**28.11.2018 Bulletin 2018/48**

(21) Numéro de dépôt: **11722557.3**

(22) Date de dépôt: **27.04.2011**

(51) Int Cl.:
*C04B 35/628* (2006.01)   *C04B 35/632* (2006.01)
*C04B 35/185* (2006.01)   *C04B 35/626* (2006.01)
*C04B 35/101* (2006.01)   *C04B 35/117* (2006.01)

(86) Numéro de dépôt international:
**PCT/IB2011/051823**

(87) Numéro de publication internationale:
**WO 2011/135517 (03.11.2011 Gazette 2011/44)**

(54) **POUDRE REFRACTAIRE COMPORTANT DES GRAINS DE MULLITE REVETUS**

FEUERFESTER PULVER ENTHALTEND BESCHICHTETE MULLIT KÖRNER

REFRACTORY POWDER COMPRISING COATED MULLITE GRAINS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2010 FR 1053241**

(43) Date de publication de la demande:
**06.03.2013 Bulletin 2013/10**

(73) Titulaire: **Saint-Gobain Centre de Recherches et d'Etudes Européen
92400 Courbevoie (FR)**

(72) Inventeurs:
• **CHAMPION, Thibault**
**F-84660 Maubec (FR)**
• **HIS, Christian**
**F-84300 Cavaillon (FR)**

(74) Mandataire: **Nony
11 rue Saint-Georges
75009 Paris (FR)**

(56) Documents cités:
**US-A1- 2005 233 084    US-A1- 2007 254 808**

• **FRITSCH ET AL.: "Water-Vapor Hot gas corrosion of ceramic materials in a combustion atmosphere", FRAUNHOFER IKTS 2006 ANNUAL REPORT, 1 janvier 2006 (2006-01-01), XP9141363,**
• **SCHMÜCKER ET AL.: "The high-temperature mullite la- alumina conversion in rapidly flowing water vapor", SCRIPTA MATERIALA, vol. 55, 2006, pages 1131-1134, XP25028035,**

## Description

### Domaine technique

L'invention se rapporte à une poudre comportant plus de 20% de grains revêtus, en pourcentage massique sur la base des oxydes de la poudre, chaque grain revêtu comportant un grain de base comportant plus de 50% de mullite en pourcentage massique, à l'utilisation d'un produit réfractaire fritté fabriqué à partir de ladite poudre et à un dispositif comportant le produit réfractaire ci-dessus.

Un tel produit réfractaire peut être en particulier utilisé dans un environnement dans lequel il est soumis à l'action de vapeur d'eau à une température supérieure à 1000°C, et notamment dans des chambres de combustion dans lesquelles la température peut atteindre 1400°C.

### Etat de la technique

Notamment dans ces applications, les matériaux mis en oeuvre doivent présenter :

- une bonne résistance à la vapeur d'eau à haute température,
- une bonne résistance aux contraintes mécaniques,
- une bonne résistance au fluage,
- une bonne résistance aux chocs thermiques, et
- une bonne résistance aux variations thermiques.

Il est connu que l'exposition de blocs de mullite à de la vapeur d'eau à haute température peut conduire à la formation d'une couche poreuse d'alumine à la surface exposée à cette vapeur.

L'article « Water-Vapor Hot gas corrosion of ceramic materials in a combustion atmosphere », Fritsch et Al., Fraunhofer IKTS 2006 annual report, cite des exemples de matériaux adaptés.

Il existe cependant un besoin pour de nouveaux matériaux adaptés à l'environnement très spécifique des chambres de combustion, notamment des chambres de combustion de turbines à gaz.

Le but de l'invention est de satisfaire ce besoin.

### Résumé de l'invention

L'invention propose une poudre selon la revendication 1.

Le revêtement peut être constitué, pour plus de 95% de sa masse, en le matériau de revêtement.

La mullite est classiquement considérée comme sensible à la corrosion à la vapeur d'eau à haute température, comme décrit par exemple dans « The high-temperature mullite /$\alpha$-alumina conversion in rapidly flowing water vapor », Schmücker et Al., Scripta Materiala 55 (2006), 1131-1134.

De plus, de manière générale, l'adhésion d'un revêtement sur un grain de base est un problème majeur lorsque le grain revêtu est susceptible de subir les contraintes sévères susmentionnées, et en particulier de subir l'action de vapeur d'eau à haute température. Les chocs thermiques et mécaniques tendent également à fissurer, voire décoller le revêtement. Enfin, les impuretés du grain de base peuvent modifier substantiellement la qualité de l'adhésion.

En outre, l'application d'un revêtement sur un grain de base conduit à un grain revêtu qui ne présente plus les propriétés de ce grain de base, ni celles du matériau de revêtement. En particulier, l'application d'un revêtement peut conduire à une dégradation sensible des propriétés du grain de base, notamment du fait de réactions chimiques entre le matériau du grain de base et ses impuretés d'une part et le matériau du revêtement et ses impuretés d'autre part.

Enfin, les grains revêtus sont notamment destinés à constituer au moins une partie de la fraction grossière d'un produit réfractaire fritté dans lequel ils sont liés au moyen d'une matrice. La sélection des matériaux, et en particulier du matériau de revêtement, impliquait donc de rechercher une compatibilité chimique avec les composés envisagés pour constituer ladite matrice.

Les inventeurs ont donc recherché des couples « matériau de grain de base - matériau de revêtement » susceptibles de répondre à l'objectif fixé. Cette recherche a notamment conduit à écarter, comme matériau de revêtement, les matériaux présentant une température de fusion inférieure à 1400°C et la plupart des matériaux céramiques non oxydes.

Comme on le verra plus en détail dans la suite de la description, les inventeurs ont finalement découvert que l'association d'un grain de base comportant plus de 50 % de mullite et des matériaux de revêtement sélectionnés permet de fabriquer un produit réfractaire parfaitement adapté aux applications à des chambres de combustion.

Sans être liés par cette théorie, les inventeurs expliquent les performances atteintes notamment par la capacité des matériaux de revêtement sélectionnés à réagir avec un ou plusieurs des constituants du grain de base, en particulier avec l'alumine et/ou la silice, notamment la silice libre, pour constituer, à l'interface entre le grain de base et le revêtement, une couche de transition contenant à la fois des éléments du matériau de revêtement et des éléments du matériau du grain de base. La couche de transition présenterait en conséquence des propriétés intermédiaires entre celles des matériaux du grain de base et du revêtement, facilitant l'adhésion du revêtement, même dans des conditions extrêmes d'humidité et de température.

Un grain revêtu peut encore comporter une ou plusieurs des caractéristiques optionnelles suivantes :

- Le grain de base comporte de préférence plus de 60%, voire plus de 70%, voire plus de 80% de mullite, en pourcentage massique sur la base des oxydes. De préférence, le grain de base est un grain de mullite-zircone ou de mullite. De préférence encore, le grain de base est un grain de mullite, de préférence un grain de mullite électrofondue.
- Le grain de base est en un matériau polycristallin.
- Le grain de base est un grain fondu, c'est-à-dire obtenu par un procédé comportant une étape de fusion et une étape de durcissement par refroidissement de la matière en fusion. Bien que ce ne soit pas le mode de réalisation préféré, le grain de base peut être également un grain fritté.
- Le grain de base est constitué d'oxydes pour plus de 95 %, plus de 98 %, voire sensiblement 100 % de sa masse.
- Le grain de base présente une taille supérieure à 50 $\mu$m et inférieure à 10 mm, de préférence inférieure à 5 mm.
- Le revêtement est solide.
- Le revêtement est de préférence constitué de :

    - une couche extérieure en ledit matériau de revêtement, et
    - une couche de transition, s'étendant entre le grain de base et ladite couche extérieure, de préférence sur une épaisseur inférieure à 10% de l'épaisseur du revêtement, et présentant une composition différente des matériaux du grain de base et de revêtement.

- La couche de transition comporte

    - de la silice et/ou de l'alumine et/ou des impuretés initialement contenues dans les grains de base, et
    - un des constituants du matériau de revêtement,

    la silice, l'alumine et les impuretés initialement contenues dans la couche de transition représentant de préférence au moins 1% de la masse du revêtement.
- La couche de transition comporte de la silice et au moins un des constituants du matériau de revêtement.
- La couche de transition comporte de la silice et tous les constituants du matériau de revêtement.
- La couche de transition comporte de la silice sous la forme d'un silicate.
- Le matériau de revêtement est choisi parmi :

    - $Al_2O_3$ ;
    - $GdAlO_3$, $Gd_4Al_2O_9$, $Gd_3Al_5O_{12}$, $AlTaO_4$, $Al_2TiO_5$, $Y_3Al_5O_{12}$, $YAlO_3$ (YAP), $Y_4Al_2O_9$, $Yb_4Al_2O_9$, $YbAlO_3$, $Yb_3Al_5O_{12}$, $MgAl_2O_4$ et leurs mélanges ;
    - $Gd_2SiO_5$, $Gd_2Si_2O_7$, $Sc2Si2O7$, $Sc_2SiO_5$, $Y_2Si_2O_7$, $Y_2SiO_5$, $Yb_2Si_2O_7$, $Yb_2SiO_5$, $ZrSiO_4$, $HfSiO_4$, $(Zr,Hf)SiO_4$, $CaSiO_3$ ;
    - $ZrO_2$, $HfO_2$, $HfTiO_4$, $ScTaO_4$, $Sc_4Hf_3O_{12}$, $Sc_4Zr_3O_{12}$, une zircone partiellement stabilisée et/ou stabilisée, une hafnone partiellement stabilisée et/ou stabilisée, et leurs mélanges ;
    - $LaPO_4$, $YPO_4$ et leurs mélanges ;
    - et leurs mélanges.

- De préférence encore, le matériau de revêtement est choisi parmi :

    - $Al_2O_3$ ; et/ou
    - $Gd_4Al_2O_9$, $AlTaO_4$, $Al_2TiO_5$, $Y_4Al_2O_9$, $Yb_4Al_2O_9$, $MgAl_2O_4$, $Y_2SiO_5$, $Yb_2SiO_5$ $Gd_2SiO_5$ et leurs mélanges ; et/ou
    - $ZrO_2$, $HfO_2$, $HfTiO_4$, $ScTaO_4$, $Sc_4Hf_3O_{12}$, $Sc_4Zr_3O_{12}$, une zircone partiellement stabilisée et/ou stabilisée à l'oxyde d'yttrium, une hafnone partiellement stabilisée et/ou stabilisée à l'oxyde d'yttrium, et leurs mélanges ;
    - et leurs mélanges.

- De préférence enfin, le matériau de revêtement est l'alumine. De préférence, ladite couche de transition comporte alors du silicate d'alumine.
- De préférence, la couche extérieure en ledit matériau de revêtement présente une teneur en impuretés (constituants autres que ledit matériau de revêtement) inférieure à 5 %, inférieure à 2 %, inférieure à 1 %, en pourcentage massique, voire sensiblement nulle.

- De préférence, le matériau de revêtement présente un coefficient de dilatation thermique supérieur à celui du matériau du grain de base, et/ou supérieur à celui de la mullite.
- L'épaisseur du revêtement est supérieure à 8 $\mu$m, de préférence supérieure à 10 $\mu$m, de préférence supérieure à 15 $\mu$m, de préférence supérieure à 20 $\mu$m et/ou inférieure à 300 $\mu$m, voire inférieure à 250 $\mu$m, voire inférieure à 200 $\mu$m..
- La masse du revêtement représente plus de 0,01%, plus de 0,1% et/ou moins de 100%, moins de 50%, moins de 40%, moins de 30%, voire moins de 10%, moins de 5%, moins de 3%, moins de 1%, de la masse du grain de base.
- Le revêtement s'étend de préférence sur plus de 60%, de préférence plus de 70%, de préférence plus de 80%, de préférence plus de 90%, de préférence plus de 95%, de préférence plus de 99% de la surface du grain de base. De préférence, le revêtement recouvre sensiblement toute la surface dudit grain de base.
- Le grain revêtu a subi un traitement thermique à une température supérieure à 1200°C, de préférence supérieure à 1500°C, voire supérieure à 1600°C, pendant une durée de préférence supérieure à 3 heures, de préférence supérieure à 5 heures.
- La porosité surfacique du revêtement, qui peut être mesurée à la surface du revêtement comme décrit ci-après, est inférieure à 25%, de préférence inférieure à 20%, de préférence inférieure à 15%, de préférence inférieure à 10% de préférence inférieure à 5%, de préférence inférieure à 3%, voire inférieure à 2%.

Les grains revêtus sont notamment destinés à être utilisés dans la fraction grossière d'un matériau réfractaire fritté.

Une poudre selon l'invention peut encore présenter une ou plusieurs caractéristiques optionnelles suivantes :

- Plus de 90 %, plus de 95 %, voire sensiblement 100 %, en pourcentage massique, des particules de la poudre présentent une taille inférieure à 10 mm, inférieure à 8 mm, voire inférieure à 5 mm.
- La fraction grossière représente moins de 80%, moins de 75%, et/ou plus de 60%, plus de 65%, voire plus de 70% de la masse des oxydes de la poudre.
- La poudre contient de préférence plus de 25%, voire plus de 30%, voire plus de 40% de grains revêtus présentant une taille supérieure ou égale à 50 $\mu$m, en pourcentage massique sur la base des oxydes de la poudre.
- Les grains revêtus de la fraction grossière sont de préférence des grains de mullite-zircone et/ou de mullite. De préférence, les grains revêtus sont des grains de mullite électrofondue. De préférence encore, le revêtement desdits grains revêtus est en alumine.
- Lesdits grains revêtus présentent une taille inférieure à 10 mm, de préférence inférieure à 8 mm, voire inférieure à 5 mm.
- Les grains non revêtus de la fraction grossière qui présentent une composition identique à celle des grains de base des grains revêtus de la fraction grossière représentent moins de 50 %, moins de 40 %, moins de 30 %, moins de 20 %, moins de 10 %, moins de 5 % de la masse de la fraction grossière.
- La fraction grossière comporte des particules composées, pour plus de 95% de leur masse, d'alumine et/ou de zircone et/ou de magnésie et/ou de silice. Ces constituants peuvent donc être présents au sein d'une même particule, par exemple sous la forme d'un eutectique. Dans un mode de réalisation, la fraction grossière comporte, pour plus de 95% de sa masse, ces particules (ou des mélanges de ces particules) et des grains revêtus, et en particulier des grains revêtus dont les grains de base sont en mullite-zircone et/ou en mullite, notamment électrofondue.
- La fraction fine comporte moins de 5%, moins de 2%, de préférence moins de 1% de grains revêtus, voire ne comporte pas de tels grains revêtus, en pourcentage en massique sur la base des oxydes de la poudre.
- La fraction fine comporte, voire est constituée, de particules composées d'alumine et/ou de zircone et/ou de magnésie et/ou de silice, de préférence composées d'alumine et/ou de silice.
- La fraction fine comporte moins de 90% de silice, en pourcentage massique sur la base des oxydes de la fraction fine.
- La poudre est constituée pour plus de 95%, plus de 99%, voire sensiblement 100% d'oxydes réfractaires, en pourcentage massique sur la base de la masse de la poudre.
- La poudre présente une teneur en alumine $Al_2O_3$ supérieure à 60%, de préférence supérieure à 70%, de préférence supérieure à 80%, de préférence supérieure à 85%, en pourcentage massique sur la base des oxydes.
- La poudre présente une teneur en silice $SiO_2$ inférieure à 30%, de préférence inférieure à 20%, de préférence inférieure à 15%, de préférence inférieure à 12%, de préférence inférieure à 10%, en pourcentage massique sur la base des oxydes.
- La poudre est sèche, notamment au toucher. De préférence, elle présente un taux d'humidité inférieur à 3%, de préférence inférieur à 2%, de préférence encore inférieur à 1%.

La poudre peut être utilisée dans un procédé de fabrication d'un produit réfractaire fritté, comportant les étapes successives suivantes :

A) préparation d'une charge de départ par ajout d'eau dans une poudre selon l'invention,

B) mise en forme de ladite charge de départ de manière à former une préforme;

C) frittage de ladite préforme.

Le frittage peut être en particulier effectué *in situ,* c'est-à-dire après que le produit a été disposé dans sa position de service.

Un produit réfractaire peut comporter des grains revêtus, ce produit étant en particulier sous la forme d'une préforme destinée à être frittée et sous la forme d'un produit fritté.

Un grain revêtu peut ainsi être une particule d'une poudre selon l'invention, ou être incorporé au sein d'une préforme ou d'un produit réfractaire fritté.

Les grains revêtus peuvent être répartis dans la masse de la préforme ou du produit réfractaire fritté , et ne sont pas seulement à proximité de leur surface. De préférence, les grains revêtus sont répartis dans toute la masse de la préforme ou du produit fritté de manière sensiblement homogène.

Plus de 90% en nombre des grains revêtus du produit réfractaire fritté ou de la préforme peuvent être répartis, de préférence de manière sensiblement homogène, au sein d'une couche superficielle présentant une épaisseur supérieure à 3 mm, voire supérieure à 5 mm et, de préférence inférieure à 15 mm, voire inférieure à 10 mm.

De préférence, dans le produit réfractaire fritté, les grains revêtus présentent une porosité ouverte inférieure celle de la matrice qui les lie.

Ce produit réfractaire peut en particulier présenter l'aspect d'un bloc, notamment d'une tuile, ou l'aspect d'une couche, par exemple sous la forme d'un garnissage appliqué, par tout procédé connu, sur une paroi à protéger.

La plus petite dimension du bloc peut être supérieure à 5 mm, supérieure à 10 mm, supérieure à 20 mm.

La plus grande dimension du bloc peut être supérieure à 50 mm, supérieure à 100 mm, supérieure à 150 mm, supérieure à 200 mm.

De préférence, la porosité ouverte du produit réfractaire est inférieure à 30%, de préférence inférieure à 25%, de préférence inférieure à 20%, voire inférieure 18%.

Ce produit réfractaire peut être fabriqué suivant le procédé décrit ci-dessus. Ce procédé permet avantageusement de fabriquer un produit réfractaire fritté selon l'invention présentant une densité apparente comprise entre 2,5 et 4 $g/cm^3$, de préférence comprise entre 2,8 et 3,5 $g/cm^3$.

L'invention concerne en outre un dispositif choisi parmi une chambre de combustion, notamment une chambre de combustion d'une turbine, et un reformeur, en particulier un reformeur Claus, ledit dispositif comportant un produit réfractaire selon l'invention, en particulier sous la forme d'une pièce de protection.

De manière plus générale, l'invention concerne l'utilisation d'un produit réfractaire fabriqué à partir d'une poudre selon l'invention dans une application où ledit produit réfractaire est soumis à des gaz, et en particulier à des gaz chargés en vapeur d'eau, lesdits gaz présentant une température supérieure à 1000°C, supérieure à 1200°C, supérieure à 1400°C, voire supérieure à 1500°C. L'invention concerne notamment l'utilisation d'un tel produit réfractaire dans une application de reformage de gaz, notamment dans un reformeur Claus.

**Définitions**

- On appelle « matériau céramique » tout matériau non métallique et non organique.
- Classiquement, un « mélange » de constituants peut prendre la forme d'un composé défini, par exemple $HfTiO_4$, d'une solution solide, par exemple de $Cr_2O_3$ et de $Al_2O_3$, ou d'une dispersion d'un oxyde dans un autre.
- On appelle « zircone partiellement stabilisée et/ou stabilisée », une zircone partiellement stabilisée ou stabilisée à l'aide d'un stabilisant et présentant moins de 50% de sa masse sous la phase cristallographique monoclinique. Les autres phases cristallographiques en présence sont la phase cubique et la phase quadratique. La quantité de zircone stabilisée et/ou partiellement stabilisée est mesurée par diffraction X.
- On appelle « hafnone partiellement stabilisée et/ou stabilisée », une hafnone partiellement stabilisée ou stabilisée à l'aide d'un stabilisant et présentant moins de 50% de sa masse sous la phase cristallographique monoclinique. Les autres phases cristallographiques en présence sont la phase cubique et la phase quadratique. La quantité d'hafnone stabilisée et/ou partiellement stabilisée est mesurée par diffraction X.
- Par « taille d'une particule », on entend la dimension d'une particule donnée classiquement par une caractérisation de distribution granulométrique réalisée avec un granulomètre laser. Le granulomètre laser utilisé pour les exemples est un Partica LA-950 de la société HORIBA.
- On appelle « taille médiane » d'un ensemble de particules, en particulier au sein d'un matériau d'imprégnation d'une poudre, le percentile $D_{50}$, c'est-à-dire la taille divisant les particules en première et deuxième populations égales en masse, ces première et deuxième populations ne comportant que des particules présentant une taille supérieure, ou inférieure respectivement, à la taille médiane.

- Par « temporaire », on entend « éliminé du produit pendant le frittage ».

Sauf indication contraire, tous les pourcentages sont des pourcentages massiques.

Les différentes caractéristiques d'un produit selon l'invention peuvent être déterminées par les méthodes de caractérisation utilisées pour les exemples ci-dessous.

**Brève description des figures**

La figure 1 est un cliché obtenu au moyen d'un microscope à balayage électronique (MEB). Elle représente, en coupe, une partie d'un grain revêtu selon l'invention, en l'occurrence une coupe d'un grain de l'exemple G2 décrit ci-après.

Les figures 2 et 3 représentent, après avoir réalisé le test de corrosion à la vapeur d'eau, une coupe polie des produits réfractaires R1 et R3, respectivement, un revêtement en alumine ayant été, préalablement au test, déposé sur la surface extérieure du produit R1, hors invention.

**Description détaillée**

La fabrication de grains revêtus peut être réalisée suivant toute technique connue de l'homme du métier. De préférence, elle résulte d'un procédé comportant les étapes suivantes :

a) préparation d'une barbotine contenant des particules en matériau de revêtement en suspension ;
b) trempage de grains de base dans ladite barbotine, puis extraction des grains ainsi mouillés ;
c) optionnellement, séchage des grains mouillés ;
d) optionnellement, traitement thermique.

**A l'étape a),** on désigne par « barbotine » une suspension de particules en matériau de revêtement ou de précurseurs desdits matériaux de revêtement dans un liquide, généralement de l'eau, avec ou sans additifs tels que dispersants, défloculants, polymères, etc. De préférence, la barbotine comporte un agent liant temporaire, c'est-à-dire éliminé pendant le séchage et/ou le frittage. La barbotine peut être fabriquée dans un récipient selon des techniques connues de l'homme du métier par mélange et homogénéisation des particules et de la quantité souhaitée de liquide. Les particules peuvent présenter une taille médiane compris entre 0,1 et 50 $\mu$m. La barbotine comporte typiquement plus de 60 % de matières sèches.
Selon l'invention, le matériau de revêtement est choisi parmi :

- l'alumine ;
- les aluminates de lanthanide(s), de Ta, de Ti, de Sc, de Y, de Mg, de Mo, et de leurs mélanges ;
- les silicates de lanthanide(s), de Sc, de Y, de Zr, de Hf, et de leurs mélanges ;
- les oxydes d'un ou plusieurs éléments parmi Ti, Sc, Y, Yb, Mg, Ce, Mo, Zr et Hf;
- les phosphates de lanthanide(s) et/ou d'Y et/ou de Sc ;
- et leurs mélanges.

Les mélanges des différents matériaux cités ci-dessus au sein d'un matériau de revêtement peuvent être sous la forme d'un composé défini, d'une solution solide, ou d'un mélange plus ou moins intime des matériaux (dispersoïde par exemple).
Le matériau de revêtement présente de préférence un coefficient de dilatation thermique compris entre $4.10^{-6}$ $°C^{-1}$ et $10.10^{-6}$ $°C^{-1}$, de préférence inférieur ou égal à $9. 10^{-6}$ $°C^{-1}$. De préférence encore, le matériau de revêtement est choisi de manière que son coefficient de dilatation thermique, à température ambiante, soit supérieur à celui du matériau du grain de base. A haute température, la couche d'enrobage est ainsi comprimée, ce qui limite les risques de fissures, voire de désolidarisation du revêtement.
Le matériau de revêtement présente de préférence une température de fusion supérieure ou égale à la température d'utilisation du produit réfractaire fritté dans lequel les grains revêtus sont destinés à être incorporés, et/ou supérieure à la température de frittage utilisée pour fabriquer ledit produit réfractaire.
**A l'étape b),** les grains de base sont immergés provisoirement dans la barbotine. Optionnellement, un mélange peut améliorer le mouillage des grains de base par la barbotine. Les grains mouillés sont des grains revêtus.

**A l'étape c),** après avoir été trempés dans la barbotine, les grains mouillés peuvent optionnellement être séchés. Le revêtement est alors avantageusement solide.

Tous les procédés de séchage conventionnels peuvent être utilisés.

**A l'étape d),** les grains mouillés et éventuellement séchés peuvent optionnellement subir un traitement thermique De préférence, les grains mouillés sont séchés et subissent un traitement thermique. Dans un mode de réalisation, ces opérations s'effectuent en une seule étape de procédé.

Le traitement thermique est adapté de manière à ajuster la porosité surfacique du revêtement à l'application visée. En particulier, les grains revêtus peuvent subir une cuisson à une température comprise entre 1200°C et 1700°C, pendant une durée de 5 heures

La porosité surfacique, qui peut être mesurée comme décrit ci-après, peut être en particulier inférieure à 25%, de préférence inférieure à 20%, de préférence inférieure à 15%, de préférence inférieure à 10% de préférence inférieure à 5%, de préférence inférieure à 3%, voire inférieure à 2%. Les inventeurs considèrent qu'une porosité surfacique inférieure à 3% ne peut être obtenue qu'en faisant subir un traitement thermique au grain revêtu. La porosité surfacique d'un grain n'ayant pas subi de traitement thermique est typiquement supérieure à 20%.

La mise en oeuvre d'un traitement thermique permet avantageusement d'obtenir un revêtement qui ne présente ni craquelures, ni écailles. Elle conduit également à améliorer considérablement l'adhésion du revêtement.

Sur les grains revêtus ayant subi un traitement thermique, les inventeurs ont mis en évidence, par microsonde, la présence, dans le revêtement, à l'interface avec le grain de base, d'une couche de transition enrichie en silice, cette silice provenant du grain de base. Par exemple, dans un grain de mullite électrofondue recouvert d'un revêtement d'alumine, un traitement thermique à 1420°C a conduit à une fine couche de transition entre la mullite du grain de base et l'alumine du revêtement, ladite couche de transition comportant du silicate d'alumine.

Le traitement thermique peut également résulter d'un frittage d'une préforme pour fabriquer un produit réfractaire selon l'invention, comme expliqué ci-après. Un tel frittage conduit également à l'apparition d'une couche de transition.

Dans un mode de réalisation, les grains revêtus, par exemple fabriqués suivant les étapes a) à d) ci-dessus, sont destinés à la fabrication d'un produit réfractaire fritté. Il peut alors être utile de préparer une poudre selon l'invention « prête à l'emploi ».

A cet effet, on sélectionne de préférence des grains revêtus présentant une taille supérieure ou égale à 50 $\mu$m, afin qu'ils puissent constituer au moins une partie de la fraction grossière. Des particules grossières, en particulier en un matériau céramique choisi parmi l'alumine, la zircone, la magnésie, la silice et leurs mélanges, peuvent compléter les grains revêtus pour constituer la fraction grossière.

On sélectionne également des particules matricielles. Ces dernières sont destinées, après frittage, à constituer la matrice du matériau réfractaire.

Enfin, de préférence, on ajoute un additif de mise en forme, de manière que la quantité d'additif de mise en forme représente moins de 6% de la masse obtenue. L'additif de mise en forme est de préférence choisi dans le groupe constitué par :

- les argiles ;
- les plastifiants, comme le Polyéthylène Glycol (PEG) ou l'alcool polyvinylique (APV) ;
- les ciments, de préférence à plus de 70%d'alumine ;
- les alumines hydratables, comme la boehmite ;
- les liants, dont les liants temporaires organiques tels que des résines, les lignosulfonates, la carboxyméthylcellulose ou la dextrine ;
- les défloculants, tels que des polyphosphates de métaux alcalins, des polyacrylates de métaux alcalins, des polycarboxylates ; et
- les mélanges de ces produits.

De préférence, l'additif de mise en forme est choisi dans le groupe constitué par les ciments, les défloculants, les argiles, les lignosulfonates, l'APV et leurs mélanges.

La poudre peut alors être conditionnée, par exemple en sacs, notamment de type « big bags », ou en fûts. La préparation de la charge de départ pour fabriquer la préforme en est facilitée.

A partir de cette poudre, un produit réfractaire peut être fabriqué suivant un procédé comportant les étapes A) à C) ci-dessus.

A l'étape A), on prépare une charge de départ par ajout d'eau dans la poudre.

La quantité d'eau est adaptée à l'étape B). Par exemple, dans le cas d'une mise en forme par pressage à froid, un ajout d'une quantité d'eau comprise entre 1,5% et 4%, en pourcentage massique sur la base de la poudre sans tenir compte des additifs de mise en forme, est préféré. Dans le cas d'une mise en forme faisant intervenir une liaison hydraulique, un ajout d'une quantité d'eau comprise entre 3 et 9%, en pourcentage massique sur la base de la poudre sans tenir compte des additifs de mise en forme, est préféré.

La charge de départ est mélangée pour obtenir une masse homogène, apte à être mise en forme à l'étape B), par exemple par coulage dans un moule ou projection sur une paroi.

A l'étape B), toutes les méthodes connues peuvent être envisagées.

A l'étape C), les conditions de frittage, et en particulier la température de frittage, dépendent de la composition de la poudre. Généralement, une température de frittage comprise supérieure à 1400°C, voire supérieure à 1450°C et/ou inférieure à 1900°C, voire inférieure à 1750°C est bien adaptée.

Dans le produit réfractaire obtenu, le revêtement reste visible sur une coupe du produit réfractaire, même lorsque la matrice est de même nature que le revêtement. En effet, il est possible de différentier par des observations en microscopie électronique à balayage (MEB) ou à l'aide d'une microsonde, le revêtement de la matrice, notamment par le fait que le revêtement présente une porosité plus faible que la porosité de la matrice, ce qui génère une gangue autour du grain de base visible entre autre à l'aide de ces méthodes.

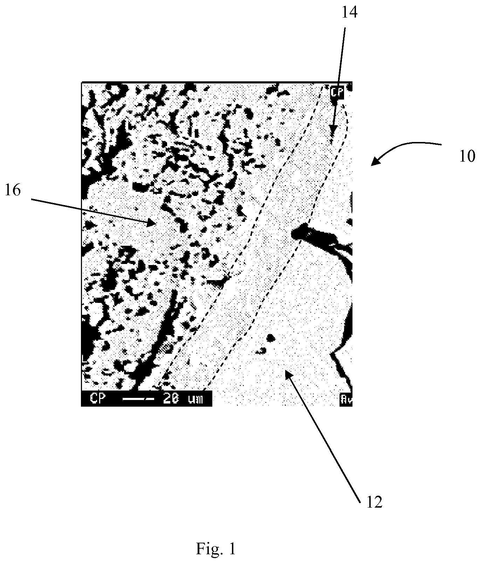

En particulier, la figure 1 représente un grain revêtu 10 comportant un grain de base 12 de mullite et un revêtement 14 d'alumine s'étendant à la surface du grain de base 12. La matrice est référencée 16.

**Exemples**

Des grains revêtus G2 et G3 selon l'invention ont été fabriqués selon un procédé comportant des étapes a) à d) décrites ci-dessus. Les grains G1 n'ont pas été revêtus.

Plus particulièrement, une barbotine a été préparée par mise en suspension d'une poudre d'alumine de pureté supérieure à 99% et de taille médiane 10 $\mu$m dans une solution d'alcool polyvinylique (APV).

Des grains de mullite électrofondue présentant des tailles comprises entre et 50 $\mu$m et 2 mm ont été versés et mélangés dans la barbotine, puis extraits de ladite barbotine. Les grains de mullite mouillés de barbotine ont ensuite été séchés pendant 24 heures à 110°C, puis traités thermiquement à une température T pendant six heures.

Des analyses par microsonde ont permis d'observer, dans les grains revêtus G2 et G3, la présence d'une couche de transition entre le grain de base en mullite et l'alumine formant la couche supérieure du revêtement. Cette couche de transition comporte de la silice sous la forme d'un silicate d'alumine.

Une observation des grains revêtus G2 et G3 a montré qu'après frittage toute la surface des grains de base est recouverte par un revêtement à base d'alumine.

Les grains revêtus G1, G2 et G3 ont ensuite été utilisés pour réaliser des poudres P1, P2 et P3, respectivement. De la dextrine de maïs et de l'huile hydrosoluble ont été utilisées comme additifs de mise en forme.

Les poudres P1, P2 et P3 ont ensuite été utilisées pour fabriquer des produits réfractaires frittés R1, R2 et R3, respectivement. A cet effet, elles ont été mélangées avec 2,6% d'eau, en pourcentages massique sur la base de la poudre, de manière à former une charge de départ. La charge de départ a été pressée sous la forme de barrettes de dimensions 112 x 23 x 20 mm$^3$ avec une presse mécanique simple effet, sous une pression de 470 kg/cm$^2$. Ces barrettes ont ensuite été frittées à une température de 1650°C, maintenue pendant 6 heures, la vitesse de montée en température étant de 100°C/h. Après le palier de température, la température a été diminuée, la vitesse de descente en température étant de 100°C/h jusqu'à 800°C, la descente en température étant libre ensuite jusqu'à la température ambiante.

**La porosité surfacique** d'un revêtement d'un grain revêtu est le pourcentage de la surface d'une coupe de ce revêtement occupée par les pores. Pour les exemples, elle a été évaluée de la manière suivante :

*Préparation de l'échantillon*

Au moins 200 grains sont prélevés aléatoirement. Ils sont ensuite enrobés dans une résine époxy et polis à l'aide de papier abrasif de granulométrie décroissante P80 à P1200. Le polissage final est effectué sur feutre avec une suspension aqueuse de diamant à 3$\mu$m de taille médiane de particule.

*Prise de clichés*

Des clichés sont ensuite réalisés à l'aide d'un microscope électronique à balayage (MEB), de préférence dans un mode utilisant les électrons rétrodiffusés (mode BSE) afin d'obtenir un très bon contraste entre les différentes phases. Chaque cliché présente au minimum 1280x960 pixels, sans prendre en compte la barre d'échelle. Le grandissement utilisé est tel que la largeur de l'image est comprise entre 20 fois et 400 fois la taille moyenne des pores. Un premier cliché peut être réalisé grâce à une estimation visuelle de la taille moyenne des pores.

Préalablement à l'analyse de la porosité surfacique, il est nécessaire de s'assurer que les porosités soient discernables à l'oeil nu sur le cliché et que les porosités ainsi que le fond continu apparaissent plus obscurs que le matériau observé.

*Analyse d'image de la porosité surfacique*

L'image est analysée à l'aide du logiciel JMicrovision v1.2.7 2002-2008, disponible sur http://www.jmicrovision.com.

- Ouvrir l'image dans Jmicrovision
- Sélectionner la rubrique « object extraction »
- Sélectionner "Color or gray intensity threshold"

  ◦ Dans la fenêtre ouverte, choisir la rubrique « Area » et matérialiser grâce à « Area editor » et l'outil polygone la zone de revêtement à analyser sur le grain. Renommer cette zone « revêtement » et la sélectionner comme zone d'analyse.
  ◦ Sélectionner la rubrique « Fill object » et sélectionner cette option
  ◦ Dans la rubrique « Treshold », dans l'onglet « Red », déplacer les index jusqu'à remplir parfaitement les pores de la couleur rouge.
  ◦ Dans la rubrique « Assign class », ajouter une classe nommée « Porosité » et la sélectionner.
  ◦ Appuyer sur « Process » : Les pores sont alors entourés en rouge.
  ◦ Aller dans la fenêtre « Data Viewer » et sélectionner le mode « Classes » et appuyer sur « Compute result from Area »
  ◦ La porosité surfacique est indiquée dans la colonne « Revêtement (image surface %) »
  ◦ 200 pores doivent être analysés et la même mesure est répétée sur 10 clichés différents. La moyenne de ces analyses donne la porosité surfacique du revêtement.

**L'épaisseur du revêtement** d'un grain est l'épaisseur moyenne de ce revêtement. Pour les exemples, elle a été évaluée de la manière suivante :
La préparation de l'échantillon est la même que pour l'analyse de porosité surfacique.

*Prise de clichés*

Des clichés sont réalisés à l'aide d'un microscope optique. Chaque cliché présente au minimum de 2080*1544 pixels, sans prendre en compte la barre d'échelle. Le grandissement utilisé est tel que la largeur de l'image est comprise entre 20 fois et 100 fois l'épaisseur moyenne du revêtement. Un premier cliché peut être réalisé grâce à une estimation visuelle de l'épaisseur du revêtement.
Préalablement à l'analyse de l'épaisseur du revêtement, il est nécessaire de s'assurer que le revêtement est discernable à l'oeil nu sur le cliché.

*Analyse d'image de l'épaisseur de revêtement*

L'image est analysée à l'aide du logiciel JMicrovision v1.2.7 2002-2008, disponible sur http://www.jmicrovision.com/

- Ouvrir l'image dans Jmicrovision
- Sélectionner l'outil « droite » dans la barre d'outils et effectuer une mesure d'épaisseur en 10 endroits du revêtement sur la périphérie de chaque grain à équidistance les uns des autres. Cette opération est répétée sur 10 grains pris aléatoirement parmi les grains initialement prélevés.
- Aller dans la fenêtre « Data Viewer » et sélectionner dans Data « 1D measurement ». Une moyenne doit alors être effectuée sur l'échantillon de données de la colonne « Line length ».

Les mesures de la **densité apparente** et de la **porosité ouverte,** des produits réfractaires ont été réalisées par mesures hydrostatiques suivant la norme NF EN 993-1., sur des échantillons de dimensions 125 x 25 x 25 $mm^3$.
La mesure du **module de rupture** (MOR) des produits réfractaires a été effectuée selon la norme NF EN 993-6.
Un test de corrosion à la vapeur d'eau a été réalisé sur les produits réfractaires suivant la méthode suivante :
Ce test s'effectue dans un four tubulaire, dont le tube est en alumine AL99 pure. Les échantillons sont des barrettes de 114*23*20$mm^3$ disposées sur deux plaques d'alumine pures superposées. Le four est porté à 1400°C puis maintenu à cette température pendant 320 heures. Une injection d'une solution aqueuse sodée à 0,15g/l de Na est effectuée à l'entrée du four et une évacuation de la vapeur d'eau est assurée par condensation avec un réfrigérant en partie arrière du four.
Les paramètres suivants sont évalués avant et après le passage dans le four :

- le module de rupture (MOR) de l'échantillon,
- la variation de module de rupture (ΔMOR%).

La variation de module de rupture ΔMOR% est définie comme étant :

$$100.(\text{MOR avant test} - \text{MOR après test})/(\text{MOR avant test}).$$

Les inventeurs considèrent qu'une diminution de 5% de la variation de module de rupture ΔMOR% par rapport au produit réfractaire R1 représente une amélioration significative.

Les caractéristiques des grains revêtus, des poudres et des produits réfractaires, ainsi que les résultats obtenus sont résumés dans le tableau 1 suivant :

Tableau 1

| **Grains revêtus** | | | |
|---|---|---|---|
| | G1 (*) | G2 | G3 |
| Nature du grain de base | mullite électrofondue | mullite électrofondue | mullite électrofondue |
| Nature du matériau de revêtement | pas de revêtement | alumine | alumine |
| Température T de traitement thermique (°C) | - | 1420°C | 1630°C |
| Propriétés | | | |
| Epaisseur moyenne du revêtement ($\mu$m) | - | 50 | 50 |
| Porosité surfacique du revêtement (%) | - | 19 | 9 |
| **Poudres** | | | |
| | P1 (*) | P2 | P3 |
| Quantité de grains revêtus de taille supérieure ou égale à 50 $\mu$m (%) | 34,5 | 45 | 45 |
| Quantité des autres particules grossières (%) | 34,5 | 25 | 22 |
| Nature des autres particules grossières | alumine | alumine | alumine |
| Quantité de particules matricielle (%) | 29,5 | 30 | 30 |
| Nature des particules matricielles | alumine | alumine | alumine |
| Dextrine de maïs | 1 | 1 | 1 |
| Huile hydrosoluble | 0,5 | 0,5 | 0,5 |
| **Produits réfractaires** | | | |
| | R1 (*) | R2 | R3 |
| Composition massique du produit réfractaire | | | |
| % $Al_2O_3$ | 90,7 | 90,7 | 90,7 |
| % $SiO_2$ | 9,1 | 9,1 | 9,1 |
| % Autres | 0,2 | 0,2 | 0,2 |
| Propriétés | | | |
| Densité apparente (g/cm$^3$) | 2,88 | 2,94 | 2,93 |
| Porosité ouverte (%) | 19,5 | 16,9 | 17,5 |
| MOR à 20°C avant test de corrosion (MPa) | 9,6 | 11,6 | 12,7 |

EP 2 563 741 B1

(suite)

| Propriétés | | | |
|---|---|---|---|
| MOR à 20°C après test de corrosion (MPa) | 7,9 | 10,1 | 11,9 |
| ΔMOR% | -18% | -12% | -7% |
| (*) Exemple comparatif | | | |

Comme le montre le tableau 1, les produits réfractaires R2 et R3 présentent une variation de module de rupture ΔMOR% plus faible que celle du produit réfractaire R1 qui ne contient pas de grains de mullite enrobés d'alumine. L'amélioration est respectivement de 33% (100.(18-12)/18) et de 61% (100.(18-7)/18).

Ces produits réfractaires présentent en outre un module de rupture MOR supérieur à celui du produit réfractaire R1, avant comme après le test de corrosion. La résistance mécanique au cours de l'utilisation en est avantageusement améliorée.

Enfin, une comparaison entre les produits réfractaires R2 et R3 montre l'intérêt d'un traitement thermique à haute température, en particulier à une température supérieure à 1500°C.

Par ailleurs, un test de corrosion à la vapeur d'eau a été réalisé dans les mêmes conditions que celles décrites ci-dessus, sur le produit réfractaire R1 après avoir déposé, à sa surface extérieure, un revêtement en alumine d'une épaisseur égale à 400 μm, identique à celui utilisé pour revêtir les grains de mullite G3.

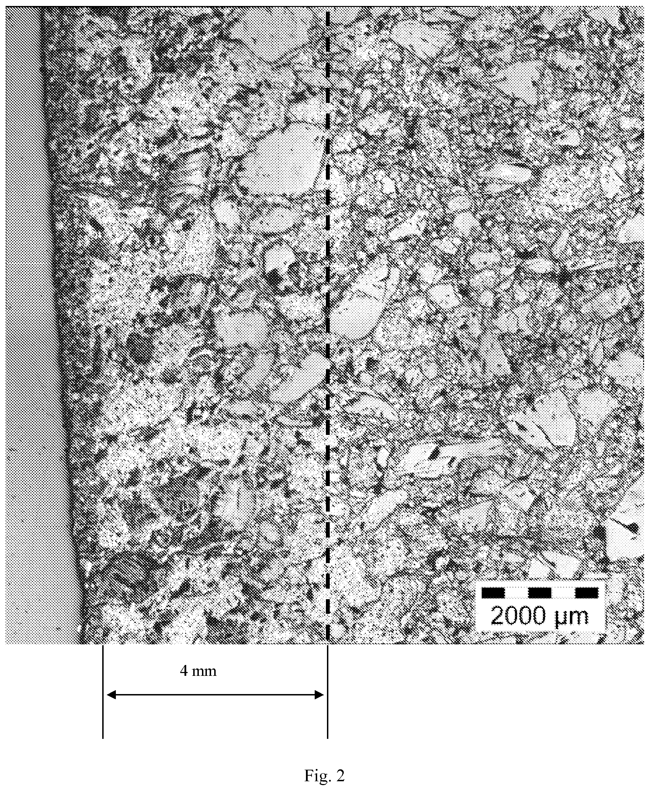

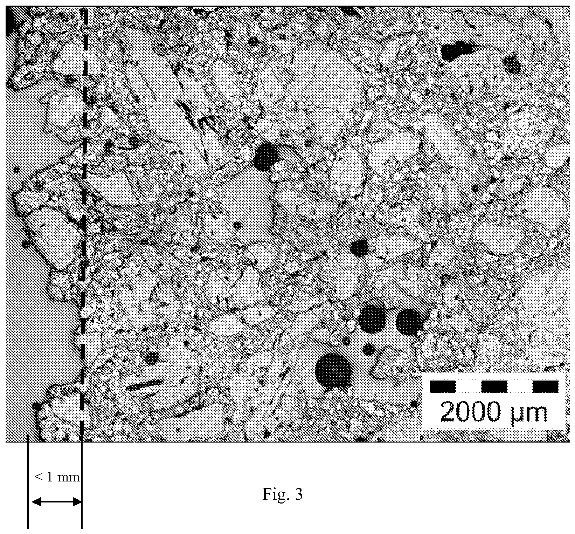

Des clichés ont été pris au microscope optique sur des coupes polies de ce produit R1 revêtu et sur le produit réfractaire R3 (figures 2 et 3, respectivement). Une comparaison de ces clichés permet de mettre en évidence une meilleure résistance du produit réfractaire R3 selon l'invention. En effet, la profondeur jusqu'à laquelle les grains de mullite ont été attaqués par la vapeur d'eau est de 4,5 mm pour le produit réfractaire R1 revêtu d'une couche d'alumine et inférieure à 1 mm pour le produit R3.

Ces mesures montrent donc un meilleur comportement au test de corrosion à la vapeur d'eau d'un produit réfractaire selon l'invention comportant des grains de mullite, lesdits grains présentant un revêtement en alumine, par rapport à un produit réfractaire comportant des grains de mullite, ledit produit réfractaire présentant un revêtement en alumine déposé sur sa surface extérieure.

Comme cela apparaît clairement à présent, l'invention fournit donc de nouveaux matériaux adaptés à l'environnement très spécifique des chambres de combustion.

Bien entendu, l'invention n'est pas limitée aux modes de réalisation fournis à titre d'exemples.

En particulier, il est possible de fabriquer des grains en utilisant une technique de projection à chaud de particules, ce qui, avantageusement, permet de former le revêtement et de le fritter en une seule étape.

**Revendications**

1. Poudre comportant :

   - une fraction grossière représentant plus de 60 % et moins de 85% de la poudre, en pourcentage massique sur la base des oxydes, et constituée des particules présentant une taille supérieure ou égale à 50 μm, dites « particules grossières », la poudre comportant plus de 20% de grains revêtus présentant une taille supérieure ou égale à 50 μm, en pourcentage massique sur la base des oxydes de la poudre, et
   - une fraction fine, formant le complément à 100% en pourcentage massique sur la base des oxydes, constituée des particules présentant une taille inférieure à 50 μm, dites « particules matricielles»,

   lesdits grains revêtus comportant chacun :

   - un grain de base constitué d'oxydes pour plus de 90% de sa masse et comportant plus de 50% en masse de mullite ;
   - un revêtement, s'étendant sur plus de 50 % de la surface dudit grain de base et constitué, pour plus de 90% de sa masse, en un matériau de revêtement choisi parmi :

      - l'alumine ;
      - $CaSiO_3$ ;
      - les aluminates de lanthanide(s), de Ta, de Ti, de Sc, de Y, de Mg, de Mo, et de leurs mélanges ;

- les silicates de lanthanide(s), de Sc, de Y, de Zr, de Hf, et de leurs mélanges ;
- les oxydes d'un ou plusieurs éléments parmi Ti, Sc, Y, Yb, Mg, Ce, Mo, Zr et Hf ;
- les phosphates de lanthanide(s) et/ou d'Y et/ou de Sc ;
- et leurs mélanges.

2. Poudre selon la revendication précédente, dans laquelle ledit revêtement s'étend sur plus de 70 % de la surface dudit grain de base.

3. Poudre selon l'une quelconque des revendications précédentes, dans laquelle la porosité surfacique du revêtement est inférieure à 25 %.

4. Poudre selon l'une quelconque des revendications précédentes, dans laquelle le revêtement est constitué de :

   - une couche extérieure en ledit matériau de revêtement, et
   - une couche de transition, s'étendant entre le grain de base et ladite couche extérieure, et comportant

      - de la silice et/ou de l'alumine,
      - et au moins un des constituants du matériau de revêtement.

5. Poudre selon l'une quelconque des revendications précédentes, dans laquelle le matériau de revêtement est choisi parmi :

   - $Al_2O_3$ ;
   - $GdAlO_3$, $Gd_4Al_2O_9$, $Gd_3Al_5O_{12}$, $AlTaO_4$, $Al_2TiO_5$, $Y_3Al_5O_{12}$, $YAlO_3$, $Y_4Al_2O_9$, $Yb_4Al_2O_9$, $YbAlO_3$, $Yb_3Al_5O_{12}$, $MgAl_2O_4$ et leurs mélanges ;
   - $Gd_2SiO_5$, $Gd_2Si_2O_7$, $Sc_2Si_2O_7$, $SC_2SiO_5$, $Y_2Si_2O_7$, $Y_2SiO_5$, $Yb_2Si_2O_7$, $Yb_2SiO_5$, $ZrSiO_4$, $HfSiO_4$, $(Zr,Hf)SiO_4$, $CaSiO_3$ ;
   - $ZrO_2$, $HfO_2$, $HfTiO_4$, $ScTaO_4$, $Sc_4Hf_3O_{12}$, $Sc_4Zr_3O_{12}$, une zircone partiellement stabilisée et/ou stabilisée, une hafnone partiellement stabilisée et/ou stabilisée, et leurs mélanges ;
   - $LaPO_4$, $YPO_4$ et leurs mélanges ;
   - et leurs mélanges.

6. Poudre selon la revendication précédente, dans laquelle le matériau de revêtement est l'alumine.

7. Poudre selon l'une quelconque des revendications précédentes contenant plus de 40% de dits grains revêtus de taille supérieure ou égale à 50 $\mu$m, en pourcentage massique sur la base des oxydes de la poudre.

8. Poudre selon la revendication précédente, dans laquelle la fraction grossière comporte, pour plus de 95% de la masse de ladite fraction grossière, des particules composées, pour plus de 95% de leur masse, d'alumine et/ou de zircone et/ou de magnésie et/ou de silice, et desdits grains revêtus, et dans laquelle la fraction fine est constituée de particules composées d'alumine et/ou de zircone et/ou de magnésie et/ou de silice.

9. Poudre selon l'une quelconque des revendications précédentes, dans laquelle la fraction fine comporte moins de 90% de silice, en pourcentage massique sur la base des oxydes de la fraction fine.

10. Poudre selon l'une quelconque des revendications précédentes, présentant une teneur en alumine $Al_2O_3$ supérieure à 60% et une teneur en silice $SiO_2$ inférieure à 30%, en pourcentage massique sur la base des oxydes de la poudre.

11. Poudre selon l'une quelconque des revendications précédentes, présentant une teneur en alumine $Al_2O_3$ supérieure à 85% et une teneur en silice $SiO_2$ inférieure à 10%, en pourcentage massique sur la base des oxydes de la poudre.

12. Poudre selon l'une quelconque des revendications précédentes, dans laquelle l'épaisseur du revêtement est inférieure à 300 $\mu$m.

13. Utilisation d'un produit réfractaire fritté fabriqué à partir d'une poudre selon l'une quelconque des revendications précédentes dans une application où ledit produit réfractaire est soumis à des gaz chargés en vapeur d'eau présentant une température supérieure à 1000°C.

14. Dispositif choisi parmi une chambre de combustion d'une turbine à gaz et un reformeur, ledit dispositif comportant un produit réfractaire fritté fabriqué à partir d'une poudre selon l'une quelconque des revendications 1 à12, en particulier sous la forme d'une pièce de protection.

**Patentansprüche**

1. Pulver enthaltend:

   - Eine grobe Fraktion die mehr als 60 % und weniger als 85 % des Pulvers, in Massen-Prozentangabe auf Basis der Oxide, darstellt, und gebildet ist aus Teilchen, die eine Größe von größer als oder gleich 50 $\mu$m aufweisen, genannt "grobe Teilchen", wobei das Pulver mehr als 20 % an beschichteten Körnern enthält, die eine Größe von größer als oder gleich 50 $\mu$m aufweisen, in Massen-Prozentangabe auf Basis der Oxide des Pulvers, und
   - Eine feine Fraktion, die das Komplement zu 100 % in Massen-Prozentangabe auf Basis der Oxide bildet, und gebildet ist aus Teilchen, die eine Größe von geringer als 50 $\mu$m aufweisen, genannt "Matrix-Teilchen",

   wobei die besagten beschichteten Körner jeweils enthalten:

   - Ein Basiskorn, das gebildet ist aus Oxiden zu mehr als 90 % seiner Masse und mehr als 50 % in Masse an Mullit enthält,
   - Eine Beschichtung, die sich über mehr als 50 % der Oberfläche des besagten Basiskorns erstreckt und gebildet ist, zu mehr als 90 % ihrer Masse, aus einem Beschichtungsmaterial ausgewählt aus:

     - Aluminiumoxid;
     - $CaSiO_3$;
     - Lanthanoid(e)-, Ta-, Ti-, Sc-, Y-, Mg- und Mo-Aluminate, und deren Mischungen;
     - Lanthanoid(e)-, Sc-, Y-, Zr- und Hf-Silikate, und deren Mischungen;
     - Oxide eines oder mehrerer Elemente aus Ti, Sc, Y, Yb, Mg, Ce, Mo, Zr und Hf;
     - Lanthanoid(e)- und/oder Y- und/oder Sc-Phosphate;
     - und deren Mischungen.

2. Pulver nach dem vorhergehenden Anspruch, wobei sich die besagte Beschichtung über mehr als 70 % der Oberfläche des besagten Basiskorns erstreckt.

3. Pulver nach irgend einem der vorhergehenden Ansprüche, wobei die Oberflächenporosität der Beschichtung geringer ist als 25 %.

4. Pulver nach irgend einem der vorhergehenden Ansprüche, wobei die Beschichtung gebildet ist aus:

   - einer äußeren Schicht aus dem besagten Beschichtungsmaterial, und
   - einer Übergangsschicht, die sich zwischen dem Basiskorn und der besagten äußeren Schicht erstreckt, und enthält:

     - Siliziumoxid und/oder Aluminiumoxid,
     - und mindestens eines der Bestandteile des Beschichtungsmaterials.

5. Pulver nach irgend einem der vorhergehenden Ansprüche, wobei das Beschichtungsmaterial ausgewählt ist aus:

   - $Al_2O_3$;
   - $GdAlO_3$, $Gd_4Al_2O_9$, $Gd_3Al_5O_{12}$, Al $TaO_4$, $Al_2TiO_5$, $Y_3Al_5O_{12}$, $YAlO_3$, $Y_4Al_2O_9$, $Yb_4Al_2O_9$, $YbAlO_3$, $Yb_3Al_5O_{12}$, $MgAl_2O_4$ und deren Mischungen;
   - $Gd_2SiO_5$, $Gd_2Si_2O_7$, $Sc_2Si_2O_7$, $Sc_2SiO_5$, $Y_2Si_2O_7$, $Y_2SiO_5$, $Yb_2Si_2O_7$, $Yb_2SiO_5$, $ZrSiO_4$, $HfSiO_4$, (Zr, Hf)$SiO_4$, $CaSiO_3$;
   - $ZrO_2$, $HfO_2$, $HfTiO_4$, $ScTaO_4$, $Sc_4Hf_3O_{12}$, $Sc_4Zr_3O_{12}$, ein teilweise stabilisiertes und/oder stabilisiertes Zirkoniumoxid, ein teilweise stabilisiertes und/oder stabilisiertes Hafniumoxid, und deren Mischungen;
   - $LaPO_4$, $YPO_4$ und deren Mischungen;
   - und deren Mischungen.

**6.** Pulver nach dem vorhergehenden Anspruch, wobei das Beschichtungsmaterial Aluminiumoxid ist.

**7.** Pulver nach irgend einem der vorhergehenden Ansprüche, enthaltend mehr als 40 % der besagten beschichteten Körner mit einer Größe von größer als oder gleich 50 μm, in Massen-Prozentangabe auf Basis der Oxide des Pulvers.

**8.** Pulver nach dem vorhergehenden Anspruch, wobei die grobe Fraktion, zu mehr als 95 % der Masse der besagten groben Fraktion, Teilchen enthält, die zusammengesetzt sind, zu mehr als 95 % ihrer Masse, aus Aluminiumoxid und/oder aus Zirkoniumoxid und/oder aus Magnesiumoxid und/oder aus Siliziumoxid, und aus den besagten beschichteten Körnern, und wobei die feine Fraktion gebildet ist aus Teilchen, die zusammengesetzt sind aus Aluminiumoxid und/oder aus Zirkoniumoxid und/oder aus Magnesiumoxid und/oder aus Siliziumoxid.

**9.** Pulver nach irgend einem der vorhergehenden Ansprüche, wobei die feine Fraktion weniger als 90 % an Siliziumoxid enthält, in Massen-Prozentangabe auf Basis der Oxide der feinen Fraktion.

**10.** Pulver nach irgend einem der vorhergehenden Ansprüche, aufweisend einen Gehalt an Aluminiumoxid $Al_2O_3$ von größer als 60 % und einen Gehalt an Siliziumoxid $SiO_2$ von geringer als 30 %, in Massen-Prozentangabe auf Basis der Oxide des Pulvers.

**11.** Pulver nach irgend einem der vorhergehenden Ansprüche, aufweisend einen Gehalt an Aluminiumoxid $Al_2O_3$ von größer als 85 % und einen Gehalt an Siliziumoxid $SiO_2$ von geringer als 10 %, in Massen-Prozentangabe auf Basis der Oxide des Pulvers.

**12.** Pulver nach irgend einem der vorhergehenden Ansprüche, wobei die Dicke der Beschichtung geringer ist als à 300 μm.

**13.** Verwendung eines feuerfesten, gesinterten Produktes, hergestellt ausgehend von einem Pulver nach irgend einem der vorhergehenden Ansprüche, in einer Anwendung in welcher das besagte feuerfeste Produkt Gasen unterworfen wird, die mit Wasserdampf beladen sind und eine Temperatur von größer als 1000 °C aufweisen.

**14.** Vorrichtung ausgewählt aus einer Brennkammer einer Gasturbine und einem Reformer, wobei die besagte Vorrichtung ein feuerfestes, gesintertes Produkt enthält, hergestellt ausgehend von einem Pulver nach irgend einem der Ansprüche 1 bis 12, insbesondere in Form eines Schutzteils.

**Claims**

**1.** A powder comprising:

- a coarse fraction representing more than 60% and less than 85% of the powder, as percentage by weight based on the oxides, and consisting of particles exhibiting a size of greater than or equal to 50 μm, referred to as "coarse particles", the powder comprising more than 20% of coated grains exhibiting a size of greater than or equal to 50 μm, as percentage by weight based on the oxides of the powder, and
- a fine fraction, forming the remainder to 100% as percentage by weight based on the oxides, consisting of particles exhibiting a size of less than 50 μm, referred to as "matrix particles",

said coated grains each comprising:

- a base grain consisting, for more than 90% of its weight, of oxides and comprising more than 50% by weight of mullite;
- a coating extending over more than 50% of the surface of said base grain and consisting, for more than 90% of its weight, of a coating material chosen from:

- alumina;
- $CaSiO_3$;
- lanthanide, Ta, Ti, Sc, Y, Mg , Mo aluminates and their mixtures;
- lanthanide, Sc, Y, Zr , Hf silicates and their mixtures;
- oxides of one or more elements chosen from Ti, Sc, Y, Yb, Mg, Ce, Mo, Zr and Hf;
- lanthanide and/or Y and/or Sc phosphates;

- and their mixtures.

2. The powder as claimed in the preceding claim, in which said coating extends over more than 70% of the surface of said base grain.

3. The powder as claimed in any one of the preceding claims, in which the surface porosity of the coating is less than 25%.

4. The powder as claimed in any one of the preceding claims, in which the coating is composed of:

   - an external layer made of said coating material, and
   - a transition layer which extends between the base grain and said external layer and which comprises:

     - silica and/or alumina,
     - and at least one of the constituents of the coating material.

5. The powder as claimed in any one of the preceding claims, in which the coating material is chosen from:

   - $Al_2O_3$;
   - $GdAlO_3$, $Gd_4Al_2O_9$, $Gd_3Al_5O_{12}$, $AlTaO_4$, $Al_2TiO_5$, $Y_3Al_5O_{12}$, $YAlO_3$, $Y_4Al_2O_9$, $Yb_4Al_2O_9$, $YbAlO_3$, $Yb_3Al_5O_{12}$, $MgAl_2O_4$ and their mixtures;
   - $Gd_2SiO_5$, $Gd_2Si_2O_7$, $Sc_2Si_2O_7$, $Sc_2SiO_5$, $Y_2Si_2O_7$, $Y_2SiO_5$, $Yb_2Si_2O_7$, $Yb_2SiO_5$, $ZrSiO_4$, $HfSiO_4$, $(Zr,Hf)SiO_4$, $CaSiO_3$;
   - $ZrO_2$, $HfO_2$, $HfTiO_4$, $ScTaO_4$, $Sc_4Hf_3O_{12}$, $Sc_4Zr_3O_{12}$, a partially stabilized and/or stabilized zirconia, a partially stabilized and/or stabilized hafnium oxide, and their mixtures;
   - $LaPO_4$, $YPO_4$ and their mixtures;
   - and their mixtures.

6. The powder as claimed in the preceding claim, in which the coating material is alumina.

7. The powder as claimed in any one of the preceding claims, containing more than 40% of said coated grains with a size of greater than or equal to 50 $\mu$m, as a percentage by weight based on the oxides of the powder.

8. The powder as claimed in the preceding claim, in which the coarse fraction comprises, for more than 95% of the weight of said coarse fraction, particles composed, for more than 95% of their weight, of alumina and/or zirconia and/or magnesia and/or silica, and said coated grains, and in which the fine fraction consists of particles composed of alumina and/or zirconia and/or magnesia and/or silica.

9. The powder as claimed in any one of the preceding claims, in which the fine fraction comprises less than 90% of silica, as percentage by weight based on the oxides of the fine fraction.

10. The powder as claimed in any one of the preceding claims, exhibiting a content of alumina $Al_2O_3$ of greater than 60% and a content of silica $SiO_2$ of less than 30%, as percentage by weight based on the oxides of the powder.

11. The powder as claimed in any one of the preceding claims, exhibiting a content of alumina $Al_2O_3$ of greater than 85% and a content of silica $SiO_2$ of less than 10%, as percentage by weight based on the oxides of the powder.

12. The powder as claimed in any one of the preceding claims, in which the thickness of the coating is less than 300 $\mu$m.

13. The use of a sintered refractory product manufactured from a powder as claimed in any one of the preceding claims in an application where said refractory product is subjected to gases laden with water vapor exhibiting a temperature of greater than 1000°C.

14. A device chosen from a combustion chamber of a gas turbine and a reformer, said device comprising a sintered refractory product manufactured from a powder as claimed in any one of claims 1 to 12, in particular in the form of a protective part.

EP 2 563 741 B1

Fig. 1

16

EP 2 563 741 B1

Fig. 2

17

2000 µm

< 1 mm

Fig. 3

## RÉFÉRENCES CITÉES DANS LA DESCRIPTION

**Littérature non-brevet citée dans la description**

- **FRITSCH et al.** Water-Vapor Hot gas corrosion of ceramic materials in a combustion atmosphere. *Fraunhofer IKTS,* 2006

- **SCHMÜCKER et al.** The high-temperature mullite /$\alpha$-alumina conversion in rapidly flowing water vapor. *Scripta Materiala,* 2006, vol. 55, 1131-1134